# EUROPEAN PATENT APPLICATION

(11) **EP 4 708 533 A1**
(43) Date of publication of application: **11.03.2026**
(21) Application number: 24894498.5
(22) Date of filing: 12.11.2024
(51) Int. Cl.: H01M 50/367, H01M 50/178, H01M 50/105, H01M 50/249

(54) **BATTERY MODULE, AND BATTERY PACK AND VEHICLE INCLUDING SAME**

(30) Priority: 20.11.2023 KR 20230161281
(71) Applicant: LG Energy Solution, Ltd., Seoul 07335 (KR)
(72) Inventor: KIM, Soo-Youl, Daejeon 34122 (KR); JUNG, Hye-Mi, Daejeon 34122 (KR)
(74) Representative: Plasseraud IP
(86) International application number: PCT/KR2024/017873
(87) International publication number: WO 2025/110605

(57) **Abstract**

The present disclosure relates to a battery module including: a plurality of battery cells; a module case having an upper opening and configured to accommodate the plurality of battery cells; and a top plate coupled to the upper opening of the module case and having a plurality of venting paths configured such that venting gas generated from the battery cell flow therethrough, and separated from each other.

## Description

### TECHNICAL FIELD

The present disclosure relates to a battery module, and a battery pack and a vehicle including the same. Specifically, the present disclosure relates to a battery module capable of suppressing thermal propagation inside the battery module, and a battery pack and a vehicle including the same.

This application is based on and claims priority from Korean Patent Application No. 10-2023-0161281, filed on November 20, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. In addition, the battery module is structured to store these battery cells densely inside a module housing. Therefore, if a thermal event occurs in one battery cell, the high-temperature gas or flame emitted may be transferred to adjacent battery cells, causing a chain reaction of battery cell explosions, which is very dangerous.

Therefore, it is necessary to develop a structure capable of suppressing and delaying heat propagation even if a thermal event occurs in some battery cells in the battery module by clearly separating battery cells and preventing gas or flames from moving to other battery cells in the battery module, thereby causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly separating the battery cells.

The present disclosure is also to provide a battery pack and a vehicle that include such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module case having an upper opening and configured to accommodate the plurality of battery cells; and a top plate coupled to the upper opening of the module case and having a plurality of venting paths configured such that venting gas generated from the battery cell flow therethrough, and separated from each other.

The top plate may include a partition configured to partition the venting path into a plurality of parts.

The partition may be configured to guide the venting gas to the outside of the top plate.

The top plate may have at least one venting hole configured such that the venting gas is discharged from an accommodation space toward the venting path.

The venting holes may be disposed in multiple rows, and the partitions may be provided between the venting holes so as to be spaced apart from each other in a horizontal direction.

The top plate may include a lower plate configured such that the partitions are seated thereon and having the venting holes, and an upper plate configured to be spaced upward from the lower plate and cover the venting holes.

The top plate may include an outlet configured to communicate the venting path with the outside of the top plate.

The outlet may be provided at at least one of longitudinal both ends of the top plate.

The battery cell may be a pouch-type battery cell including an electrode lead on at least one side in a longitudinal direction, and the partition may be configured to extend in the longitudinal direction of the battery cell, and the partition, the lower plate, and the upper plate may be connected to each other to form a plurality of venting paths that are isolated from each other so that longitudinal both ends of the battery cell are open.

The partition, the lower plate, and the upper plate may be formed integrally by extrusion.

The battery module may further include a blocking member provided between the battery cells and configured to come into contact with the top plate.

An upper end of the blocking member may be configured to be inserted into the top plate.

In another aspect of the present disclosure, there is provided a battery pack including a battery module according to the present disclosure.

The battery pack according to the present disclosure may include a pack case having an upper opening to receive the battery module and including a plurality of frames provided at front and rear of the battery module, and a pack cover coupled to the upper opening of the pack case, wherein the venting gas discharged to the outside from the venting path may be configured to be discharged to the outside of the pack case through a space between the frame or the battery module and the pack cover.

In another aspect of the present disclosure, there is provided a vehicle including a battery module according to the present disclosure.

### Advantageous Effects

According to one aspect of the present disclosure, it is possible to suppress and delay gas or flames from transferring to other battery cells in the battery module, thereby causing thermal runaway, even if a thermal event occurs in some battery cells in the battery module. Therefore, the safety and reliability of the battery module can be guaranteed.

In addition, according to another aspect of the present disclosure, high-temperature gas or flames generated from battery cells inside the battery module can be smoothly discharged to the outside of the battery module.

In addition, according to another aspect of the present disclosure, high-temperature gas or flames discharged to the outside of the battery module can be prevented from flowing back into the battery module.

In addition, according to another aspect of the present disclosure, it is possible to prevent or delay events due to thermal runaway in a battery pack including a plurality of battery modules or a device equipped with the same.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional perspective view of a battery module according to an embodiment of the present disclosure.
FIG. 4 is a cross-sectional view of a battery module according to an embodiment of the present disclosure.
FIG. 5 is a cross-sectional perspective view of a battery module according to an embodiment of the present disclosure.
FIG. 6 is a top perspective view of a top plate included in a battery module according to an embodiment of the present disclosure.
FIG. 7 is a bottom perspective view of a top plate included in a battery module according to an embodiment of the present disclosure.
FIG. 8 is a partially cross-sectional view of a battery module according to another embodiment of the present disclosure.
FIG. 9 is a partially cross-sectional view of a battery module according to another embodiment of the present disclosure.
FIG. 10 is a bottom perspective view of a top plate included in a battery module according to another embodiment of the present disclosure.
FIG. 11 is a schematically perspective view of a battery pack including a battery module according to an embodiment of the present disclosure, which shows a direction in which gas or the like is discharged to the outside of the battery pack when the battery module experiences thermal runaway.
FIG. 12 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position, arrangement, or rotation of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

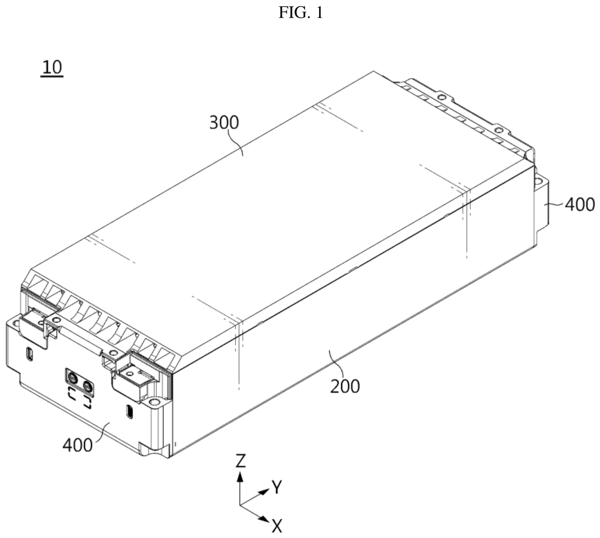

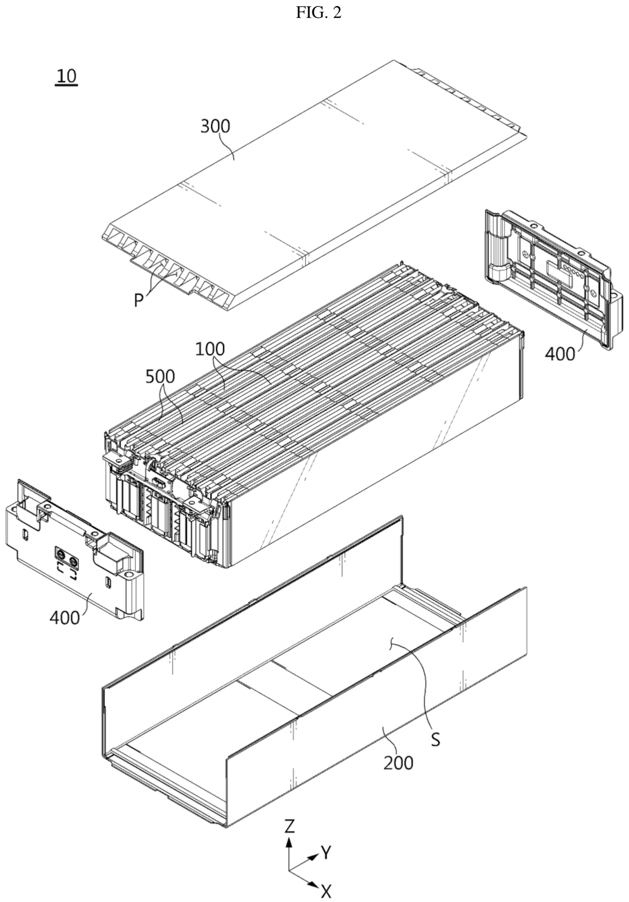

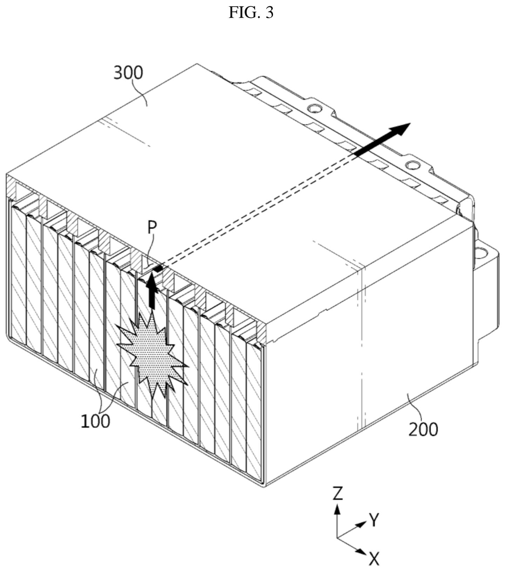

FIG. 1 is a perspective view of a battery module according to an embodiment of the present disclosure, FIG. 2 is an exploded perspective view of a battery module according to an embodiment of the present disclosure, and FIG. 3 is a cross-sectional perspective view of a battery module according to an embodiment of the present disclosure.

Referring to FIG. 2, a plurality of battery cells 100 may be included. Although not shown in the drawing, the plurality of battery cells 100 may include an electrode assembly, a cell case that accommodates the electrode assembly, and an electrode lead that is connected to the electrode assembly and extends to the outside of the cell case to function as an electrode terminal. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

As illustrated in FIG. 2, a plurality of battery cells 100 may be arranged side by side in the front-back direction (X-axis direction) while standing in the vertical direction (Z-axis direction).

Meanwhile, the present disclosure is not limited to a specific type or shape of the battery cell 100, and various battery cells 100 known at the time of filing the present disclosure may be applied to the battery pack 20 of the present disclosure. In the present embodiment, although a pouch-type secondary battery with high energy density and easy stacking will be described as shown in the drawing, it is obvious that a cylindrical or prismatic secondary battery may also be applied to the battery cell 100.

Meanwhile, referring to FIG. 2, the module case 200 may be configured to accommodate a plurality of battery cells 100. Specifically, an accommodation space S may be formed in the module case 200, and a plurality of battery cells 100 may be accommodated in the accommodation space S.

Specifically, the module case 200 may be configured as a U-frame having an upper opening. In the case where the module case 200 is configured as a U-frame, it may be provided to cover both side surfaces and the bottom surface of the battery cell stack. The module case 200 may include a left plate and a right plate covering both side surfaces of the battery cell stack, and a lower plate covering the bottom surface. In addition, the left plate, the right plate, and the lower plate may be configured in an integrated form. In this case, the module case 200 may have an upper opening and front and rear openings.

The module case 200 may be made of a metal material having rigidity and heat resistance in order to physically or chemically protect the battery cells 100 accommodated therein.

Meanwhile, the battery module 10 may include end plates 400 provided at the front and rear openings of the module case 200. The end plates 400 may be welded to the module case 200.

In addition, although not shown in the drawing, the battery module 10 may include a bus-bar assembly and/or module terminal electrically connected to the plurality of battery cells 100 accommodated therein.

The battery module 10 according to an embodiment of the present disclosure may include a top plate 300. The top plate 300 may be coupled to the upper opening of the module case 200. Thus, the top plate 300 may be provided to form the upper surface of the module case 200. The top plate 300 may be welded to the module case 200. In this case, the combined form of the top plate 300 and the module case 200 may form a square tube with the front and rear openings.

The top plate 300 may be made of a material having excellent heat resistance and/or fire resistance. For example, the top plate 300 may be made of a fire-resistant plastic material.

A venting path P may be formed in the top plate 300. The venting path P may be configured to allow venting gas generated from the battery cell 100 to flow. The venting path P may be configured such that the accommodation space S communicates with the outside of the battery module 10. That is, as indicated by the thick arrow in FIG. 3, when a thermal event occurs in any battery cell 100, venting gas or flame may be discharged through the venting path P, and the venting gas or flame in the venting path P may be discharged to the outside of the battery module 10.

A plurality of venting paths P may be provided. The plurality of venting paths P may be configured to be separated from each other. Accordingly, the venting gas may flow in each venting path P, and the venting gas flowing in any venting path P may be blocked from moving to the adjacent venting path P.

According to the above-implemented configuration of the present disclosure, since multiple venting paths P are separated from each other, when a thermal event occurs in a battery cell 100, venting gas or flame may be prevented from transferring to the adjacent battery cell 100, thereby effectively preventing or delaying thermal runaway propagation between battery cells 100.

In addition, since the respective venting paths P are independently provided, high-temperature gas or flame discharged outside the accommodation space S may be prevented from flowing back into the accommodation space S. As a result, the safety and reliability of the battery module 10 may be guaranteed.

In addition, according to the above-implemented configuration of the present disclosure, since venting gas or the like is smoothly discharged to the venting path P, heat accumulation may be prevented or suppressed inside the battery module 10.

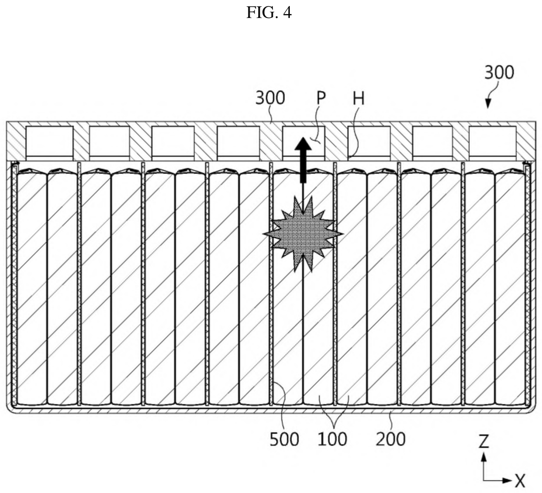

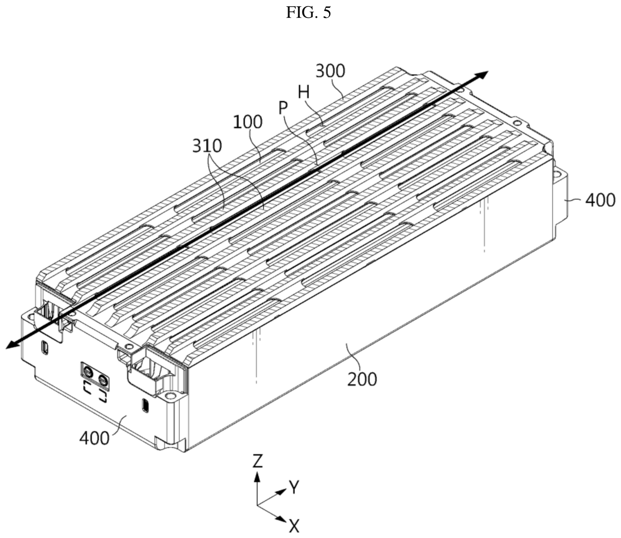

FIG. 4 is a cross-sectional view of a battery module according to an embodiment of the present disclosure. In addition, FIG. 5 is a cross-sectional perspective view of a battery module according to an embodiment of the present disclosure.

More specifically, the top plate 300 may include a partition 310 configured to partition the venting path P into a plurality of parts. The partition 310 may be provided inside the venting path P formed in the top plate 300. In this case, referring to FIG. 4, a plurality of partitions 310 may be provided to be spaced apart from each other along one direction. The one direction may be defined as the direction in which the battery cells 100 are stacked, that is, in the left-right direction (X-axis direction).

According to the above-implemented configuration of the present disclosure, since the venting paths P are separated from each other by the partitions 310, the venting gas may be blocked from moving to the adjacent venting paths P. Therefore, since the venting gas or the like is prevented from moving to the adjacent battery cells 100, the thermal runaway propagation may be effectively prevented or delayed between the battery cells 100.

The partition 310 may be configured to guide the venting gas to the outside of the top plate 300. Referring to FIG. 5, the partition 310 may be configured to extend in the longitudinal direction (Y-axis direction) of the battery cell 100. The length of the partition 310 may be provided to correspond to the length of the top plate 300.

Referring to FIGS. 4 and 5, a venting hole H may be formed in the top plate 300. The venting hole H may be configured such that the venting gas generated in the battery cell 100 is discharged from the accommodation space S to the venting path P. The venting hole H may be provided in the top plate 300 to enable directional venting in a specific direction.

Specifically, as indicated by the arrow in FIG. 4, the venting gas or the like generated in the battery cell 100 may be introduced from the accommodation space S to the venting path P through the venting hole H. As indicated by the arrows in FIG. 5, the venting gas or the like may be discharged to the outside of the battery module 10 through the venting path P in both directions.

According to the above-implemented configuration of the present disclosure, since the venting gas or the like discharged from the venting hole H may move directly to the venting path P formed in the top plate 300, the venting gas or the like may be discharged more quickly to the outside of the battery module 10.

A plurality of venting hole H may be provided. The venting holes H may be provided at regular intervals in the horizontal direction (X-axis and Y-axis directions). The venting holes H may be arranged in multiple rows. For example, as illustrated in FIG. 5, the venting holes H may be arranged in a row along the longitudinal direction of the battery cell 100, and the multiple venting holes H arranged in a row may be disposed in multiple rows along the stacking direction of the battery cell 100.

According to the above-implemented configuration of the present disclosure, even if a thermal event occurs at any location of the battery cell 100, the venting gas or flame may be smoothly discharged to the outside of the battery module 10 through specific venting holes H provided above the battery cell 100.

It may be configured to correspond to the spacing between the venting holes H. In this case, the partitions 310 may be provided between the venting holes H so as to be spaced apart from each other in the horizontal direction. The partitions 310 may be disposed along the stacking direction of the battery cell 100. The partition 310 may be configured to block the venting gas or the like from moving in the stacking direction of the battery cell 100.

According to the above-implemented configuration of the present disclosure, since the partition 310 is provided between the venting holes H, the venting gas inside the venting path P may be prevented from flowing back into the module case 200 through the venting hole H of the adjacent venting path P. Accordingly, even if a thermal event occurs in any battery cell 100, the venting gas or heat may be more unlikely to transfer to another battery cell 100. That is, according to the above-implemented configuration of the present disclosure, the thermal runaway propagation may be effectively prevented or delayed between the battery cells 100.

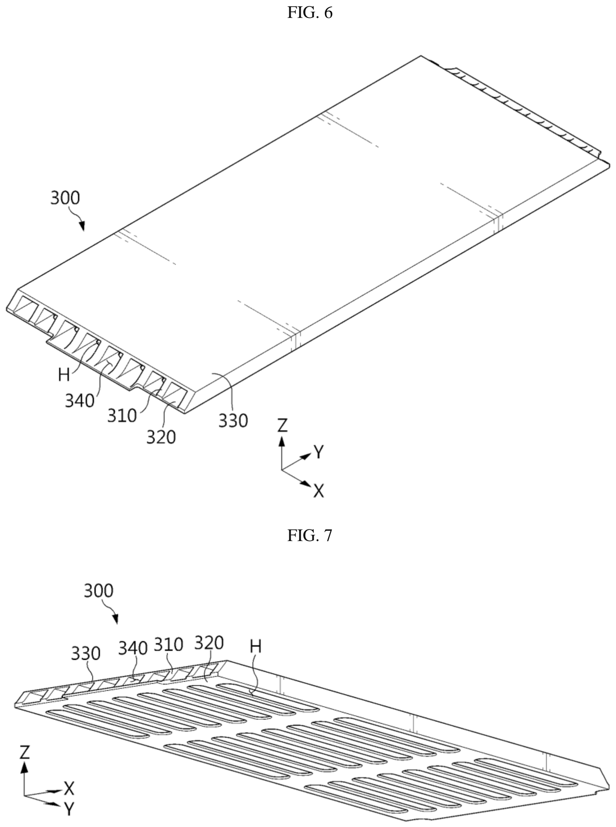

FIG. 6 is a top perspective view of a top plate included in a battery module according to an embodiment of the present disclosure, and FIG. 7 is a bottom perspective view of a top plate included in a battery module according to an embodiment of the present disclosure.

Referring to FIGS. 6 and 7, the top plate 300 may include a lower plate 320 and an upper plate 330, in addition to the partitions 310. The lower plate 320 may be configured such that the partitions 310 are seated thereon. The lower plate 320 may form the lower surface of the top plate 300. A venting hole H may be formed in the lower plate 320.

The upper plate 330 may be provided to be spaced upward from the lower plate 320. The upper plate 330 may be configured to cover the venting holes H. The upper plate 330 may form the upper surface of the top plate 300. The upper plate 330 may be configured as a flat plate. The upper plate 330 may be configured to prevent venting gas discharged from the venting hole H from moving upward.

In this case, the venting path P may be defined as a space formed by the lower plate 320, the upper plate 330, and the partition 310. According to the above-implemented configuration of the present disclosure, the venting gas or the like in the venting path P may flow only inside one venting path P without moving toward the adjacent battery cell 100. Accordingly, the movement of the venting gas or the like between the venting paths P adjacent to each other in the left-right direction (X-axis direction) on both sides of one partition 310 may be restricted.

In addition, according to the above-implemented configuration of the present disclosure, the venting gas or the like discharged to the venting path P through the venting hole H may be prevented from flowing back into the accommodation space S of the battery cells 100 through the venting hole H provided in another venting path P.

According to an embodiment of the present disclosure, the partition 310, the lower plate 320, and the upper plate 330 may form a plurality of venting paths P that are isolated from each other and have openings at the longitudinal ends of the battery cell 100.

Specifically, the top plate 300 may include an outlet 340. The outlet 340 may be configured to communicate the venting path P and the outside of the top plate 300 with each other. That is, the venting gas or the like in the venting path P may be discharged to the outside of the top plate 300 through the outlet 340.

The outlet 340 may be provided at at least one of the longitudinal both ends of the top plate 300. The outlets 340 may be configured so that the longitudinal both ends of the venting path P are open. The location of the outlet 340 may vary depending on the direction in which the venting gas is discharged from the venting path P. As in the embodiment shown in FIG. 6 and FIG. 7, the outlets 340 may be provided at longitudinal both ends of the top plate 300, so that the venting gas of the venting path P may be discharged in both directions. In this case, the partition 310 may guide the venting gas to flow toward the outlets 340 provided at both ends of the venting path P.

According to the above-implemented configuration of the present disclosure, the venting gas or the like may be discharged in one target direction, for example, in the direction in which the outlet 340 is formed. That is, since the surrounding areas of the outlet 340, excluding the venting hole H, are blocked, the directional venting of the venting gas may be more effectively induced toward the outlet 340. Thus, according to the present implemented configuration, the venting gas may be quickly guided from the inside of the venting path P to the outlet 340 and discharged to the outside.

Meanwhile, the open end of the partition 310 may be configured in a diagonal shape. The partition 310 may be configured to have a portion of which the longitudinal length is reduced upward. That is, the end of the partition 310 may be configured to form an acute angle with respect to the lower plate 320. Accordingly, the outlet 340 may also be configured to form an acute angle with respect to the lower plate 320. In this case, as shown in FIGS. 6 and 7, the length of the upper plate 330 may be configured to be shorter than the length of the lower plate 320 to correspond to the diagonal shape of the end of the partition 310.

According to the above-implemented configuration of the present disclosure, the cross-sectional area of the outlet 340 may be configured to be larger than when both ends of the partition 310 are configured in a straight shape. Accordingly, since more venting gas is able to be discharged through the outlet 340, the venting gas may be discharged more smoothly to the outside of the battery module 10.

Alternatively, although not shown in the drawing, the upper plate 330 may be configured to protrude further outward than the partition 310. In this case, the protruding upper plate 330 may block the venting gas discharged from the outlet 340 from moving upward. As a result, directional venting of the venting gas may be further induced.

In addition, the partition 310, the lower plate 320, and the upper plate 330 may be formed integrally by extrusion. That is, the top plate 300 may be produced by extrusion so that the partition 310, the lower plate 320, and the upper plate 330 are formed integrally. As the top plate 300 is extruded, the partition 310 may be formed to extend in a straight line along the extrusion direction (the longitudinal direction) of the top plate 300. In addition, as the top plate 300 is extruded, the outlet 340 may be formed at the end of the top plate 300.

According to the above-implemented configuration of the present disclosure, since the partition 310 is integrally provided with the lower plate 320 and the upper plate 330, the process of combining various components may be omitted, and the defect of the portion where the partition 310 is combined with the lower plate 320 and the upper plate 330 may be minimized.

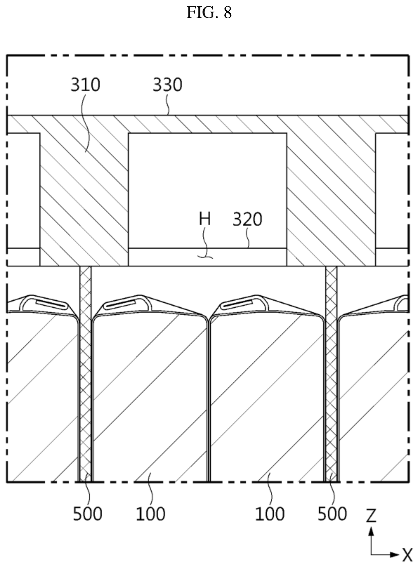

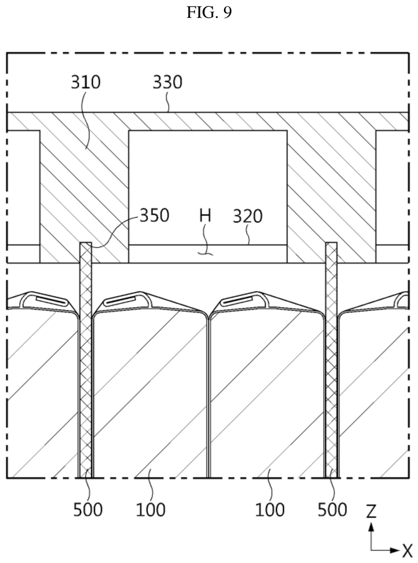

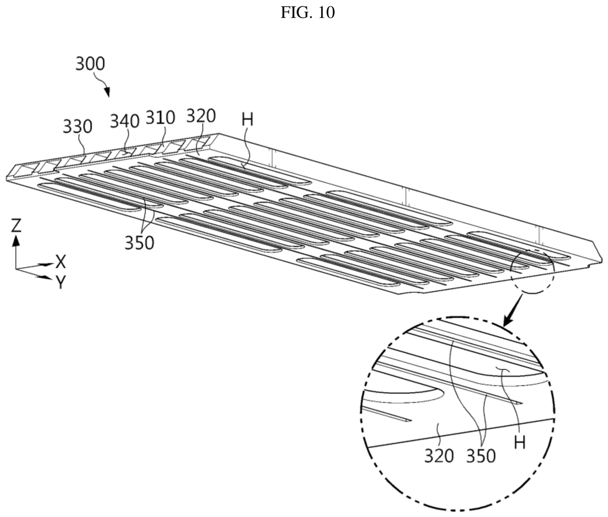

FIG. 8 is a partially cross-sectional view of a battery module according to another embodiment of the present disclosure, FIG. 9 is a partially cross-sectional view of a battery module according to another embodiment of the present disclosure, and FIG. 10 is a bottom perspective view of a top plate included in a battery module according to another embodiment of the present disclosure.

Referring to FIG. 2, FIG. 4, and FIG. 8, a battery module 10 according to an embodiment of the present disclosure may include a blocking member 500. The blocking member 500 may be provided between a plurality of battery cells 100 so as to partition the battery cells 100. In particular, at least one blocking member 500 may be included in one battery module 10. A plurality of blocking members 500 may be provided along one direction in which the battery cells 100 are arranged.

The blocking members 500 may be configured to be disposed between every one battery cell 100 or more. For example, as illustrated in FIG. 4, in the battery module 10 according to an embodiment of the present disclosure, blocking members 500 may be disposed between every two battery cells 100, and a plurality of venting holes H may be formed in a row along the longitudinal direction (Y-axis direction) of the battery cells 100 above the battery cells 100 provided between adjacent blocking members 500.

The blocking member 500 may be configured as an insulating pad that is thinner than the battery cells 100. The blocking member 500 may be made of a material having excellent heat resistance and/or fire resistance. Alternatively, the blocking member 500 may be configured as a pad having a compressive force, for example, a material such as silicone or aerogel.

According to the above-implemented embodiment of the present disclosure, the battery cells 100 may be partitioned or separated from each other to prevent gas or flames from moving to other blocking members 500 adjacent to the blocking member 500. In addition, according to the above-implemented embodiment of the present disclosure, the blocking member 500 may contribute to the structural rigidity of the battery cells 100 by compressing the battery cells 100 when the battery cells 100 are swollen.

In this case, as in the embodiments illustrated in FIGS. 8 and 9, the blocking member 500 may be provided to be in contact with the top plate 300. Specifically, the upper end of the blocking member 500 may be configured to come into contact with the lower plate 320 of the top plate 300. In addition, the partitions 310 corresponding to the number of blocking members 500 may be provided on the top of the blocking member 500. Accordingly, the blocking member 500 may be provided at the bottom of the partition 310 provided between the venting holes H.

Accordingly, gas or flame emitted from the battery cell 100 accommodated between adjacent blocking members 500 may be discharged to the outside of the module case 200 only through the venting hole H located between the adjacent blocking members 500.

According to the above-implemented configuration of the present disclosure, since the gap between the blocking member 500 and the top plate 300 is minimized, the space in which the venting gas is able to flow may be reduced, thereby preventing thermal runaway propagation to the adjacent battery cells 100. Therefore, the safety and reliability of the battery module 10 may be guaranteed.

In particular, referring to FIG. 9, the upper end of the blocking member 500 may be configured to be inserted into the top plate 300.

In this case, the blocking member 500 may be configured to extend further than the battery cell 100 in the vertical direction. That is, the vertical height of the blocking member 500 may be configured to be greater than the vertical height of the battery cell 100. Therefore, both sides of the battery cell 100 may be blocked by the blocking members 500, so that the movement of the venting gas or the like may be blocked inside the module case 200.

Specifically, referring to FIGS. 9 and 10, an insertion groove 350 may be formed on the top plate 300. The insertion groove 350 may be configured such that the upper end of the blocking member 500 is inserted thereinto. The insertion groove 350 may be configured to be at least a portion of the lower plate 320 being recessed. In this case, when the top plate 300 is coupled to the module case 200, the upper end of the blocking member 500 may be in close contact with the insertion groove 350 without a gap.

In addition, the insertion groove 350 may be formed to extend in a straight line along the longitudinal direction of the blocking member 500. The insertion groove 350 may be formed to extend in a straight line along the extrusion direction (Y-axis direction in FIG. 10) when the top plate 300 is extruded. In this case, the length of the insertion groove 350 may be configured to correspond to the length of the blocking member 500.

According to this implemented configuration of the present disclosure, since the upper end of the blocking member 500 is inserted into the insertion groove 350 of the top plate 300, the battery cells 100 may be more reliably separated from each other.

In addition, according to the above-implemented configuration of the present disclosure, since the blocking member 500 is fixed to the top plate 300, it is possible to suppress bending deformation of the blocking member 500. Even if a thermal event occurs, the high-temperature and high-pressure venting gas or flame is unlikely to push out the blocking member 500 and transfer to other battery cells 100. As a result, when thermal runaway propagation of the battery module 10 occurs, thermal runaway propagation between the battery cells 100 may be effectively prevented or delayed.

In addition, the insertion groove 350 is located inside the battery module 10 so as not to increase the height of the battery module 10 and does not cause changes in the appearance of the battery module 10. Therefore, the energy density of the battery module 10 may be prevented from being affected.

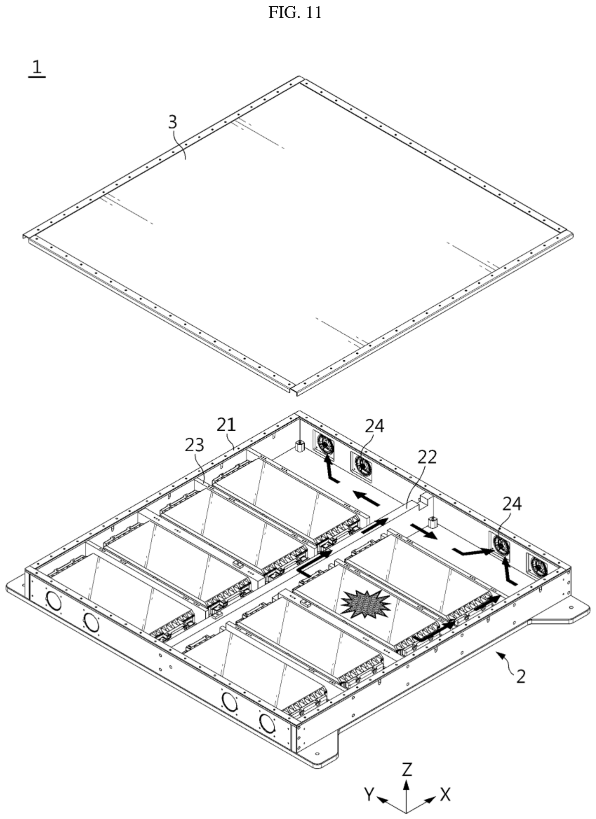

FIG. 11 is a schematically perspective view of a battery pack including a battery module according to an embodiment of the present disclosure, which shows a direction in which gas or the like is discharged to the outside of the battery pack when the battery module experiences thermal runaway.

Referring to FIG. 11, a battery pack 1 according to an embodiment of the present disclosure may include one or more battery modules 10 according to an embodiment of the present disclosure described above. The battery pack 1 according to the present disclosure may further include a pack case 2 for accommodating a BMS (Battery Management System) for integrated control of charging and discharging of one or more battery modules 10, a current sensor, a fuse, and the components described above.

A plurality of battery modules 10 may be arranged adjacently in the front-back direction and/or left-right direction in multiple rows inside the pack case 2. For example, as illustrated in FIG. 11, a plurality of battery modules 10 may be arranged in four rows along the left-right direction (X-axis direction) and in two rows along the front-back direction (Y-axis direction).

The pack case 2 may be configured to have an upper opening so as to accommodate the battery module 10 therethrough. The pack case 2 may be made of a material capable of securing mechanical rigidity, such as a metal such as steel or SUS, or may include such a material.

In addition, the pack case 2 may include a plurality of frames 21, 22, and 23. At least some of the plurality of frames 21, 22, and 23 may be provided on both sides of the battery module 10. The frames 21, 22, and 23 may include side frames 21, a center beam 22, and a cross-beam 23.

The side frames 21 may be provided to extend upward from respective edges of a base frame configured to form a bottom surface of the pack case 2. The side frames 21 may form side surfaces of the pack case 2. The side frames 21 may have a plurality of unit walls to surround a plurality of battery modules 10.

In addition, the center beam 22 and the cross-beam 23 may be provided to partition the plurality of battery modules 10. For example, the center beam 22 may be formed as a partition that extends long in the stacking direction (X-axis direction) of the battery modules 10 and may be interposed between the battery modules 10 that are disposed adjacently in the front-back direction. In addition, the cross-beam 23 may be formed as a partition that extends long in the front-back direction and may be interposed between the battery modules 10 that are disposed adjacently in the longitudinal direction (Y-axis direction) of the battery module 10.

According to this implemented configuration, heat or flame may be prevented from directly transferring between the battery modules 10 whose storage spaces are separated by the center beam 22 and the cross-beam 23.

In addition, the pack case 2 may have a discharge unit 24. The discharge unit 24 may be configured to discharge the venting gas generated in the battery module 10 to the outside of the pack case 2. The discharge unit 24 may be provided in the form of a hole passing through the pack case 2 from the inside to the outside. Alternatively, the discharge unit 24 may be configured as a venting device that is mountable in the hole of the pack case 2 and configured to operate when discharges are generated inside the pack case 2.

The discharge unit 24 may be provided on the side surface of the pack case 2, i.e., on the side frames 21. A plurality of discharge units 24 may be provided. The discharge units 24 may be located on at least some of the unit walls of the side frames 21. In addition, each discharge unit 24 may be formed separately on each of two or more unit walls, or two or more discharge units 24 may be formed on one unit wall.

According to the above-implemented configuration of the present disclosure, it is easy to discharge the venting gas more quickly to the outside of the pack case 2 in the event of an abnormal situation of the battery cell 100.

Meanwhile, the number of installations and locations of the discharge units 24 described based on the embodiment in FIG. 11 are merely examples, and may vary.

A pack cover 3 may be configured to cover the top of a plurality of battery modules 10. The pack cover 3 may be configured to cover the upper opening of the pack case 2. The pack cover 3 may be coupled to the side frames 21. In addition, the pack cover 3 and the center beam 22 may be configured to be spaced a predetermined distance apart from each other.

The pack cover 3 may protect components stored inside the pack case 2, such as the battery module 10, and prevent the matter released from the battery module 10 from being discharged to the outside of the pack case 2, especially to the upper portion.

Specifically, as indicated by the arrow illustrated in FIG. 11, in the present disclosure, the venting gas discharged to the outside of the battery module 10 through the venting path P may be configured to be discharged to the outside of the pack case 2. The venting gas may be configured to be discharged to the outside of the pack case 2 through the space between the frame, for example, the center beam 22, and the pack cover 3 and/or the space between the battery module 10 and the pack cover 3. Here, the space between the battery module 10 and the pack cover 3 may indicate the space between the outlet 340 and the pack cover 3.

Accordingly, when a thermal event occurs in the accommodation space S of the battery module 10, the venting gas or the like may flow into the venting path P through the venting hole H and may be discharged to the outside of the battery module 10 through the outlet 340. The venting gas or the like may move to the discharge unit 24 of the pack case 2 through the venting path provided in the inner space of the pack case 2, and may be discharged to the outside of the pack case 2.

In this case, other parts of the battery module 10, excluding the outlet 340, such as the upper plate 330, may be configured to be in full contact with the pack cover 3. Accordingly, the venting gas or the like discharged to the outside of the battery module 10 may be concentratedly captured in the venting path of the pack case 2, instead of spreading in all directions inside the pack case 2, and may be guided to move directly toward the discharge unit 24. According to the above-implemented configuration of the present disclosure, since the venting gas or the like is prevented from flowing into other battery modules 10 and heat transfer is prevented, thermal propagation between the battery modules 10 may be effectively prevented or delayed. As a result, the safety and reliability of the battery pack 1 unit may be guaranteed.

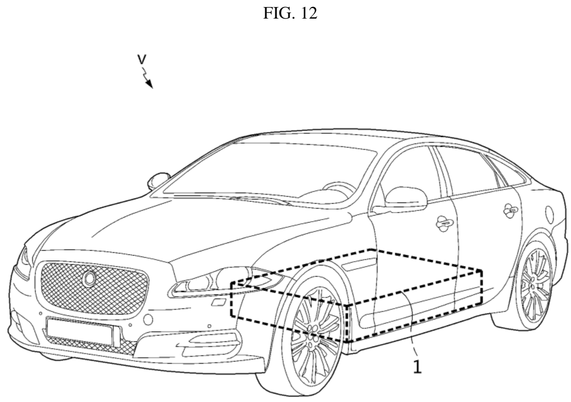

FIG. 12 is a schematically perspective view of a vehicle including a battery pack according to an embodiment of the present disclosure.

Referring to FIG. 12, a vehicle V according to an embodiment of the present disclosure may include one or more battery packs 1 according to an embodiment of the present disclosure or one or more battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V operates by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery module comprising:
a plurality of battery cells;
a module case having an upper opening and configured to accommodate the plurality of battery cells; and
a top plate coupled to the upper opening of the module case and having a plurality of venting paths configured such that venting gas generated from the battery cell flow therethrough, and separated from each other.

2. The battery module according to claim 1,
wherein the top plate comprises a partition configured to partition the venting path into a plurality of parts.

3. The battery module according to claim 2,
wherein the partition is configured to guide the venting gas to the outside of the top plate.

4. The battery module according to claim 2,
wherein the top plate has at least one venting hole configured such that the venting gas is discharged from an accommodation space toward the venting path.

5. The battery module according to claim 4,
wherein the venting holes are disposed in multiple rows, and
wherein the partitions are provided between the venting holes so as to be spaced apart from each other in a horizontal direction.

6. The battery module according to claim 4,
wherein the top plate comprises
a lower plate configured such that the partitions are seated thereon and having the venting holes, and
an upper plate configured to be spaced upward from the lower plate and cover the venting holes.

7. The battery module according to claim 1,
wherein the top plate comprises an outlet configured to communicate the venting path with the outside of the top plate.

8. The battery module according to claim 7,
wherein the outlet is provided at at least one of longitudinal both ends of the top plate.

9. The battery module according to claim 6,
wherein the battery cell is a pouch-type battery cell comprising an electrode lead on at least one side in a longitudinal direction,
wherein the partition is configured to extend in the longitudinal direction of the battery cell, and
wherein the partition, the lower plate, and the upper plate are connected to each other to form a plurality of venting paths that are isolated from each other so that longitudinal both ends of the battery cell are open.

10. The battery module according to claim 6,
wherein the partition, the lower plate, and the upper plate are formed integrally by extrusion.

11. The battery module according to claim 1,
further comprising a blocking member provided between the battery cells and configured to come into contact with the top plate.

12. The battery module according to claim 11,
wherein an upper end of the blocking member is configured to be inserted into the top plate.

13. A battery pack comprising a battery module according to any one of claims 1 to 12.

14. The battery pack according to claim 13, comprising
a pack case having an upper opening to receive the battery module and comprising a plurality of frames provided at front and rear of the battery module, and
a pack cover coupled to the upper opening of the pack case,
wherein the venting gas discharged to the outside from the venting path is configured to be discharged to the outside of the pack case through a space between the frame or the battery module and the pack cover.

15. A vehicle comprising a battery module according to any one of claims 1 to 12.
